# EUROPÄISCHE PATENTSCHRIFT

(11) **EP 1 980 360 B1**
(45) Veröffentlichungstag und Bekanntmachung des Hinweises auf die Patenterteilung: **08.07.2009**
(21) Anmeldenummer: 08007021.2
(22) Anmeldetag: 09.04.2008
(51) Int. Cl.: B23Q 3/155, B23Q 3/157

(54) **Einrichtung zum Wechseln von Werkzeugen und/oder Werkstücken**
Distributor for exchanging tools and/or workpieces
Dispositif de changement d'outils et/ou de pièces à usiner

(30) Priorität: 11.04.2007 DE 102007017324
(43) Veröffentlichungstag der Anmeldung: 15.10.2008
(73) Patentinhaber: StarragHeckert GmbH, 09117 Chemnitz (DE)
(72) Erfinder: Lasch, Sven, 09337 Hohenstein (DE); Pönisch, Achim, 09573 Augustusburg (DE)
(74) Vertreter: Rumrich, Gabriele

(56) Entgegenhaltungen:
- EP-A- 0 030 674
- EP-A- 1 317 992
- DE-A1- 4 009 537
- DE-A1- 4 331 064
- US-A- 5 554 087

## Beschreibung

Die Erfindung betrifft eine Einrichtung zum Wechseln von Werkzeugen und/oder Werkstücken, mit einem zwischen einem Werkzeug-/Werkstückmagazin und einem Bearbeitungsraum eines Bearbeitungszentrums bewegbaren Ständer, mit einem an dem Ständer angeordneten Schwenkantrieb, der zur Beaufschlagung einer Schwenkeinheit vorgesehen ist, wobei das Werkzeug und/oder das Werkstück mittels der Schwenkeinheit aus einer ersten Position in eine zweite Position und umgekehrt bringbar ist.

Derartige Einrichtungen finden beispielsweise Anwendung als automatischer Werkzeugwechsler. Sie entnehmen das jeweils benötigte Werkzeug aus einem Werkzeugmagazin, transportieren dieses zur Arbeitsspindel, tauschen es dort gegen das abgearbeitete Werkzeug aus und legen das abgearbeitete Werkzeug wieder in dem Werkzeugmagazin ab.
Die Werkzeuge befinden sich dabei in Magazinen mit in vertikaler oder in horizontaler Richtung angeordneten Speicherplätzen. Ebenso weist die Arbeitsspindel, mit der ein Werkzeugtausch durchgeführt wird, eine horizontale und/oder vertikale Lage auf. Um einen Wechsel eines Werkzeuges zwischen einer in Horizontallage befindlichen Arbeitsspindel und einem sich in vertikaler Stellung befindenden Speicherplatz bzw. zwischen einer in Vertikallage befindlichen Arbeitsspindel und einem sich in horizontaler Stellung befindenden Speicherplatz durchzuführen, muss der Werkzeugwechsler das Werkzeug zwischen dem Werkzeugmagazin und der Arbeitsspindel in drei Raumachsen (x, y, z) transportieren und außerdem zwischen einer vertikalen und horizontalen Position - und umgekehrt - schwenken.
Bei bekannten Werkzeugwechslern werden die verschiedenen Bewegungsvorgänge unabhängig voneinander und aufeinanderfolgend durchgeführt. Dementsprechend sind getrennt angesteuerte Antriebe für die einzelnen Bewegungsabläufe vorgesehen. Dadurch sind diese Werkzeugwechsler konstruktiv aufwändig. Zudem verlängert der aufeinanderfolgende Ablauf der einzelnen Bewegungsvorgänge die Werkzeugwechselzeiten.

Es wurden deshalb Einrichtungen für den Werkzeugwechsel entwickelt, die diese Nachteile des Standes der Technik beseitigen sollen.

So wird in DE 43 31064 A1 ein Werkzeugwechsler offenbart, der für ein Bearbeitungszentrum mit horizontaler Arbeitsspindel und mit einem Werkzeugmagazin, in dem die Werkzeuge mit vertikaler Achse angeordnet sind, eingesetzt wird. Der Wechsler weist einen zweiarmigen Greifer auf, der mit einem Arm das neue Werkzeug zuführt und mit dem anderen Arm das abgearbeitete Werkzeug der Arbeitsspindel entnimmt. Der Greifer ist an einem Greiferkopf gelagert, der mittels eines Schlittens in einer der drei Raumachsen verfahrbar ist. Dabei ist der Schlitten in einem horizontal verfahrbaren Wagen vertikal verschiebbar angeordnet. Am unteren Ende des Schlittens ist seitlich ein Greiferkopf mittels eines Kugellagers drehbar gelagert. Angetrieben werden Schlitten und Greifer von einem elektrischen Motor, der an einem Rahmen des horizontal bewegbaren Wagens befestigt ist. Der Motor treibt dabei eine Antriebsriemenscheibe - je nach gewünschter Bewegungsrichtung im oder entgegen Uhrzeigersinn - an. Diese Riemenscheibe kann sich um einen Winkel von 90° drehen, was eine Verschwenkung des Greifers um 90° zur Folge hat. Bei diesem bekannten Werkzeugwechsler wird zwar nur ein Motor benötigt, um eine Hubbewegung des Greifers und dessen Schwenkbewegung zu erzielen. Allerdings weist diese Einrichtung eine relativ große Anzahl Getriebeelemente auf, wodurch der konstruktive Aufbau aufwändig und vor allem auch störanfällig wird.

In DE 40 09 537 C2 wird eine Werkzeugwechseleinrichtung beschrieben, die einen mittels einer Transporteinrichtung zwischen einer Magazinübergabeposition und einer Spindelübergabeposition horizontal bewegbar geführten Werkzeugwechslerständer aufweist. An diesem ist eine Greifeinrichtung mit zwei oder mehreren Greifern angebracht. Die Transportvorrichtung weist dabei eine Linearführung, längs der der Werkzeugwechslerständer linear verschiebbar geführt ist, und einen Antrieb auf. Dieser Antrieb weist wiederum eine schwenkbetätigbare Kurbelschwinge auf, die mittels eines Schwenkantriebes schwenkbetätigbar ist. Dabei werden Schwenkantrieb und das davon schwenkbar betätigte Ende der Kurbelschwinge an einem ortsfesten Grundkörper gehalten. Mit dem anderen Ende greift die Kurbelschwinge schwenkbeweglich und relativverschieblich am Werkzeugwechslerständer an.
Auch diese bekannte Werkzeugwechseleinrichtung zeigt noch einen relativ komplizierten und aufwändigen Aufbau, der auch durch die Verwendung einer Kurvensteuerung als Antriebseinrichtung bedingt ist.

Der Erfindung liegt die Aufgabe zugrunde, eine Einrichtung zum Wechseln von Werkzeugen und/oder Werkstücken der im Oberbegriff des Anspruchs 1 genannten Art zu schaffen, die bei großer Funktionssicherheit und geringem Raumbedarf weniger aufwändig und störanfällig in ihrem Aufbau und zudem universell einsetzbar ist

Diese Aufgabe wird erfindungsgemäß mit den Merkmalen des ersten Patentanspruchs gelöst. Vorteilhafte Ausgestaltungen ergeben sich aus den Unteransprüchen.

Erfindungsgemäß ist durch eine Drehbewegung des Schwenkantriebes um eine Schwenkachse eine Schwenkbewegung der das Werkzeug und/oder das Werkstück tragenden Schwenkeinheit um eine parallel zu der Schwenkachse des Schwenkantriebes verlaufenden Schwenkachse und gleichzeitig eine zwangsweise lineare Verschiebung des Schwenkantriebes an dem Ständer erzielbar. Das Werkzeug und/oder das Werkstück ist hierbei durch eine Schwenkbewegung der Schwenkeinheit um die Schwenkachse aus einer horizontalen oder vertikalen Speicherposition in dem Werkzeug-/Werkstückmagazin in eine vertikale oder horizontale Arbeitsposition in dem Bearbeitungsraum und umgekehrt bringbar.
Die Schwenkeinheit ist einerseits drehbeweglich an dem Ständer angelenkt und steht andererseits über einen Schwenkhebel mit dem Schwenkantrieb in Wirkverbindung, wobei das antriebsseitige Ende des Schwenkhebels drehfest mit dem Schwenkantrieb verbunden und dessen abtriebsseitiges Ende drehbar an der Schwenkeinheit angelenkt ist.

Die Schwenkeinheit ist in einem ortsfest an dem Ständer angeordneten Gelenkpunkt um eine Schwenkachse drehbeweglich gelagert.

Das abtriebsseitige Ende des Schwenkhebels ist in einem auf der Schwenkeinheit angeordneten Gelenkpunkt drehbar gelagert.

Die durch den Gelenkpunkt am Ständer führende Schwenkachse und die durch den Gelenkpunkt an der Schwenkeinheit führende Schwenkachse verlaufen parallel zu der der Antriebswelle des Schwenkantriebes zuordenbaren Schwenkachse. Zudem verlaufen die drei Schwenkachsen orthogonal zu der Richtung der linearen Verschiebebewegung des Schwenkantriebes.

Die Schwenkachse und die der drehbeweglichen Lagerung der Schwenkeinheit am Ständer zugeordnete ortsfeste Schwenkachse befinden sich in einer gemeinsamen, der linearen Verschiebebewegung des Schwenkantriebes gleichgerichteten Ebene.

Der Schwenkantrieb ist auf einem an dem Ständer linear verschiebbar gelagerten Schlitten angeordnet. Der Schlitten ist dabei an dem Ständer in orthogonal zu den Schwenkachsen angeordneten Führungsschienen verschiebbar.

Sowohl in einer Ausgangsstellung der Schwenkeinheit vor Beginn der Schwenkbewegung als auch in einer Endstellung nach Beendigung der Schwenkbewegung befindet sich der Schwenkantrieb in einer Endlage an dem Ständer, welche einem maximalen Abstand zwischen den beiden Schwenkachsen entspricht.

In einer Zwischenstellung der Schwenkeinheit, die einer halben Schwenkbewegung um die Schwenkachse entspricht, befindet sich der Schwenkantrieb in einer Endlage an dem Ständer, welche einen minimalen Abstand zwischen den beiden Schwenkachsen bedeutet. Dabei kann die halbe Schwenkbewegung der Schwenkeinheit um die Schwenkachse einem Drehwinkel von etwa 45° entsprechen.

Bei einer Drehbewegung des Schwenkantriebes um die Schwenkachse um 180° kann durch die Schwenkeinheit eine Schwenkbewegung um 90° absolvierbar sein.

An der Schwenkeinheit kann mindestens eine Halterung zur Aufnahme von mindestens einem Werkzeug und/oder Werkstück angebracht sein.
Der Schwenkantrieb ist dabei an dem Ständer vorzugsweise in vertikaler Richtung verschiebbar angeordnet.
Sowohl in der Ausgangsstellung als auch in der Endstellung der Schwenkeinheit ist jeweils eine Totpunktlage mit einer mechanischen Verriegelung dieser Stellungen vorhanden.
Durch die Nutzung des Eigengewichtes der Schwenkeinheit ist das Drehmoment des Schwenkantriebes reduzierbar. Auch ist ein sinusförmiger Winkelgeschwindigkeitsverlauf der Schwenkbewegung der Schwenkeinheit erzielbar. Der Schwenkantrieb kann als hydraulischer Schwenkantrieb, Hydromotor, Getriebemotor oder elektrischer Motor ausgebildet sein.

Die Erfindung wird nachstehend anhand eines Ausführungsbeispieles näher erläutert.
Es zeigen:

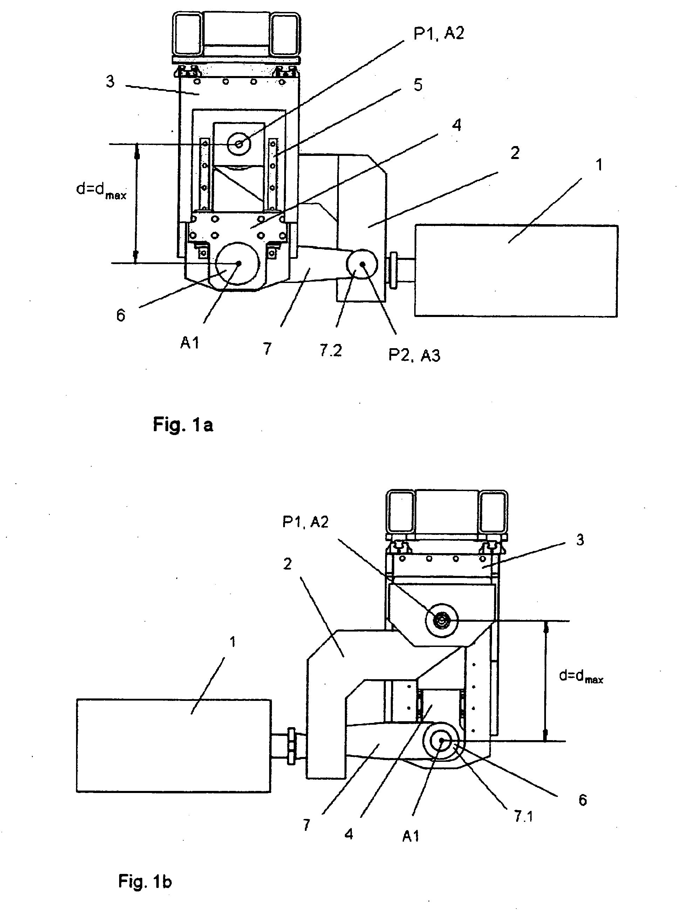

- Fig. 1a:: die erfindungsgemäße Einrichtung in einer Ausgangsstellung in Vorderansicht
- Fig. 1 b:: die erfindungsgemäße Einrichtung in einer Ausgangsstellung in Rückansicht
- Fig. 2:: die erfindungsgemäße Einrichtung in einer Zwischenstellung
- Fig. 3:: die erfindungsgemäße Einrichtung in einer Endstellung

In diesem Ausführungsbeispiel stellt die erfindungsgemäße Einrichtung einen Werkzeugwechsler dar, der Werkzeuge zwischen einem hier nicht näher dargestellten Werkzeugmagazin mit horizontal ausgerichteten Speicherplätzen und einer sich in Vertikallage befindenden, hier ebenfalls nicht näher gezeigten, Arbeitsspindel wechselt.
Ebenso ist es möglich, Werkzeugmagazine mit vertikal ausgerichteten Speicherplätzen und horizontale Arbeitsspindeln zu kombinieren. Gleichfalls ist der Einsatz der im folgenden näher beschriebenen erfindungsgemäßen Einrichtung für einen Werkstückwechsel möglich.

In Fig. 1 ist eine Ausgangsstellung eines Werkzeugwechsels dargestellt. Dabei zeigt Fig. 1 a die Vorderseite der erfindungsgemäßen Einrichtung und Fig. 1b die Rückseite.
Ein Werkzeug 1 ist aus einem hier nicht näher dargestellten Werkzeugmagazin mit horizontaler Ausrichtung der Speicherplätze entnommen worden und befindet sich in einer Halterung einer Schwenkeinheit 2.
Zwischen einer Magazinübergabeposition und einer Spindelübergabeposition ist ein Ständer 3 horizontal bewegbar angeordnet. An dem Ständer 3 ist ein Schlitten 4 in Führungsschienen 5 in vertikaler Richtung linear verfahrbar geführt. Auf dem Schlitten 4 befindet sich ein Schwenkantrieb 6, der vorzugsweise ein hydraulischer Schwenkantrieb ist. Es kann aber auch ein elektrischer Motor, ein Hydromotor oder ein Getriebemotor zum Einsatz kommen. Der Schwenkantrieb 6 weist eine Schwenkachse A1 auf, die orthogonal zu der Verschieberichtung des Schlittens 4 verläuft.
Die Schwenkeinheit 2 ist einerseits in einem an dem Ständer 3 gestellfest angeordneten Gelenkpunkt P1 drehbeweglich gelagert, während sie andererseits über einen Schwenkhebel 7 mit dem Schwenkantrieb 6 verbunden ist. Dieser Schwenkhebel 7 ist mit seinem antriebsseitigen Ende 7.1 drehfest mit der der Antriebswelle des Schwenkantriebes 6 zuordenbaren Schwenkachse A1 verbunden und mit seinem abtriebsseitigen Ende 7.2 drehbar an einem Gelenkpunkt P2 an der Schwenkeinheit 2 angelenkt. Die Schwenkachse A1 des Schwenkantriebes 6 und die durch den Gelenkpunkt P1 am Ständer 3 führende Schwenkachse A2 sowie eine dritte, durch den Gelenkpunkt P2 an der Schwenkeinheit 2 führende, Schwenkachse A3 verlaufen parallel zueinander. Die Schwenkachse A1 des Schwenkantriebes 6 und die durch den am Ständer 3 gelegenen Gelenkpunkt P1 verlaufende Schwenkachse A2 sind in einem Abstand d zueinander sowie in einer gemeinsamen, der linearen Verschiebebewegung des Schlittens 4 gleichgerichteten Ebene, angeordnet.

Bei der in Fig. 1 dargestellten Ausgangsstellung (hier: Wechselstellung vor dem horizontal ausgerichteten Werkzeugmagazin) erfolgte noch keine Schwenkbewegung der Schwenkeinheit 2 (Schwenkwinkel 0°). Hier befinden sich die Schwenkachse A1 des Schwenkantriebes 6 und die Schwenkachse A3 des Schwenkhebels 7 im Gelenkpunkt P2 in einer gemeinsamen, quer zu der Verschiebebewegung des Schlittens 4 verlaufenden Ebene.
Der an dem Ständer 3 linear (hier: vertikal) verschiebbar angeordnete Schlitten 4 mit dem darauf befindlichen Schwenkantrieb 6 befindet sich in seiner untersten Stellung. Der Abstand d zwischen den beiden parallelen Schwenkachsen A1 und A2 entspricht einem Maximalwert dₘₐₓ.

Bei Einleitung eines Drehmomentes durch den Schwenkantrieb 6 erfolgt eine Drehung um die Schwenkachse A1, wodurch das mit der Antriebswelle des Schwenkantriebes 6 drehfest verbundene Ende 7.1 des Schwenkhebels 7 mitgenommen wird. Das an der Schwenkeinheit 2 in dem Gelenkpunkt P2 angelenkte und um die Schwenkachse A3 drehbare abtriebsseitige Ende 7.2 des Schwenkhebels 7 wirkt dadurch auf die Schwenkeinheit 2 derart, dass diese eine Schwenkbewegung um die Schwenkachse A2 am Ständer 3 vollführt. Gleichzeitig wird bei Einleitung eines Drehmomentes des Schwenkantriebes 6 aufgrund der vorhandenen Wirkverbindung des Schwenkhebels 7 mit der Schwenkeinheit 2 und der Anordnung des Schwenkantriebes 6 auf dem Schlitten 4 zwangsläufig eine lineare Verfahrbewegung des Schlittens 4 - und damit auch des Schwenkantriebes 6 - in den Führungsschienen 5 vertikal nach oben hervorgerufen.
Das bedeutet, dass der Abstand d der beiden Schwenkachsen A1 und A2 sich verringert, da der Gelenkpunkt P1 der Schwenkachse A2 ortsfest an dem Ständer 3 angeordnet ist, während sich die Schwenkachse A1 des Schwenkantriebes 6 durch die Verfahrbewegung des Schlittens 4 der Schwenkachse A2 annähert. Die durch den Gelenkpunkt P2 führende Schwenkachse A3 bewegt sich in dieser Zeit auf einem Kreisbogen um die Schwenkachse A1 des Schwenkantriebes 6.

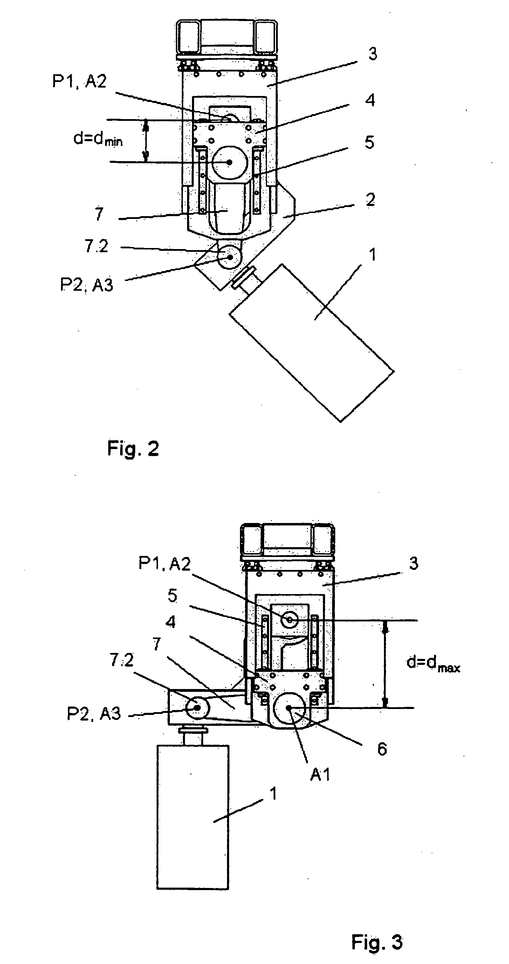

Fig. 2 zeigt eine Momentaufnahme dieses Bewegungsablaufes, bei der die Schwenkeinheit 2 mit dem Werkzeug 1 eine Schwenkbewegung um die Schwenkachse A2 um einen Drehwinkel von 45° absolviert hat, während der Schwenkantrieb 6 eine Drehung um die Schwenkachse A1 von 90° vollzogen hat. In dieser Stellung nimmt der ebenfalls um 90° geschwenkte Schwenkhebel 7 eine vertikale Lage ein, wobei das antriebsseitige Ende 7.1, das abtriebsseitige Ende 7.2 des Schwenkhebels 7 und der Gelenkpunkt P1 sich auf einer gemeinsamen senkrechten Geraden befinden. Der an dem Ständer 2 in Führungsschienen 5 linear verschiebbare Schlitten 4 mit dem Schwenkantrieb 6 befindet sich hier in seiner obersten Stellung. Der Abstand d zwischen den beiden parallelen Schwenkachsen A1 und A2 entspricht einem Minimalwert dₘᵢₙ.

Bei der weiteren Drehung der Antriebswelle des Schwenkantriebes 6 und damit des antriebsseitigen Endes 7.1 des Schwenkhebels 7 um die Schwenkachse A1 wird über das in dem Gelenkpunkt P2 angreifende abtriebsseitige Ende 7.2 des Schwenkhebels 7 auch die Schwenkeinheit 2 mitgenommen. Gleichzeitig bewegt sich der Schlitten 4 zwangsweise wieder aus seiner obersten Endlage entlang der Führungsschienen 5 vertikal nach unten. Der Abstand d zwischen den beiden Schwenkachsen A1 und A2 vergrößert sich wieder.

In Fig. 3 ist schließlich die sich in der Endstellung (hier: Wechselstellung vor der Arbeitsspindel) befindende Einrichtung gezeigt. Das Werkzeug 1 nimmt hier eine vertikale Lage ein. Die Schwenkeinheit 2 hat gemeinsam mit dem Werkzeug 1 eine Schwenkbewegung um die Schwenkachse A2 von 90° absolviert, während in dieser Zeit der Schwenkantrieb 6 gemeinsam mit dem Schwenkhebel 7 eine Drehung um die Schwenkachse A1 von 180° vollzogen hat. Dabei hat auch die durch den Gelenkpunkt P2 an der Schwenkeinheit 2 führende Schwenkachse A3 eine Schwenkung um 180° um die Schwenkachse A1 vollführt.
Der Schlitten 4 mit dem darauf befindlichen Schwenkantrieb 6 befindet sich wieder in seiner untersten Stellung, die einem Abstand dₘₐₓ der Schwenkachse A1 von der Schwenkachse A2 entspricht.
Hier befinden sich die Schwenkachse A1 des Schwenkantriebes 6 und die Schwenkachse A3 des Schwenkhebels 7 im Gelenkpunkt P2 wieder in einer gemeinsamen, quer zu der Verschiebebewegung des Schlittens 4 verlaufenden Ebene.
In diesem Ausführungsbeispiel wird von einer Schwenkung des Werkzeugs 1 aus einer horizontalen Ausgangsstellung in eine vertikale Endstellung um 90° ausgegangen. Genauso wie eine Schwenkung des Werkzeugs 1 um 90° aus einer vertikalen Stellung in eine horizontale Stellung möglich ist, ist auch eine entsprechende Drehung des Schwenkantriebes 6 um einen Winkel, der größer oder kleiner 180° ist, und eine Schwenkbewegung der Schwenkeinheit 2 und damit des Werkzeugs 1 um einen Winkel, der größer oder kleiner als 90° ist, möglich. Auch kann die Verfahrbewegung des Schlittens 4 an dem Ständer 3 abweichend von der vertikalen Richtung erfolgen. Es können beispielsweise über entsprechende Veränderungen in den Abmessungen und in der Anordnung der einzelnen Bauteile bzw. der gesamten erfindungsgemäßen Einrichtung andere Schwenkbereiche erzielt werden.
Aufgrund des auf den Schwenkhebel 7 wirkenden Drehmomentes und dessen Verbindung wiederum mit dem linear verschiebbaren Schwenkantrieb 6 findet ein zwangsläufiger Bewegungsablauf statt. Dadurch kann die Gewichtskraft der Schwenkeinheit 2 zur Reduzierung des Drehmomentes genutzt werden. Sowohl in der Anfangsstellung als auch in der Endstellung der Schwenkeinheit 2 herrscht eine Totpunktlage, bei der eine mechanische Verriegelung stattfindet, die ein ungewolltes Rückdrehen der Schwenkeinheit 2 aus diesen Positionen verhindert. Durch die Eigenmasse der Schwenkeinheit 2 wird diese Verriegelung noch unterstützt.
Mit der erfindungsgemäßen Einrichtung kann der antriebsbedingte Aufwand wesentlich reduziert werden. Ebenso ist ein stark verminderter Platzbedarf vorhanden. Gleichzeitig wird eine sinusförmige Übertragung des Drehwinkels erzielt, wodurch ein sanftes Anlaufen und ein sanftes Abbremsen des Werkzeuges ohne ruckartige Bewegungen möglich ist. Zudem wird dadurch die Justage der Einrichtung vereinfacht.
Weitere Vorteile der erfindungsgemäßen Einrichtung sind ihre Funktionssicherheit bei einer geringen Störanfälligkeit. Sie weist geringe Verfahrwege bei einer hohen Wechselgeschwindigkeit und geringen Massekräften auf. Außerdem kann dieser Wechsler ohne Einschränkung für Werkzeuge/Werkstücke beliebiger Größen eingesetzt werden, und ebenso sind mit ihm große Hebellängen zur Überbrückung großer Wege realisierbar.

## Patentansprüche

1. Einrichtung zum Wechseln von Werkzeugen und/oder Werkstücken, mit einem zwischen einem Werkzeug-/Werkstückmagazin und einem Bearbeitungsraum eines Bearbeitungszentrums bewegbaren Ständer (3), mit einem an dem Ständer (3) angeordneten Schwenkantrieb (6), der zur Beaufschlagung einer Schwenkeinheit (2) vorgesehen ist, wobei das Werkzeug (1) und/oder das Werkstück durch eine Schwenkbewegung der Schwenkeinheit (2) um eine Schwenkachse (A2) aus einer horizontalen oder vertikalen Speicherposition in dem Werkzeug-/Werkstückmagazin in eine vertikale oder horizontale Arbeitsposition in dem Bearbeitungsraum und umgekehrt bringbar ist,
**dadurch gekennzeichnet, dass**
- die Schwenkeinheit (2) in einem gestellfest an dem Ständer (3) angeordneten Gelenkpunkt (P1) um die Schwenkachse (A2) drehbeweglich gelagert ist, und
- der Schwenkantrieb (6) mit einer zweiten, parallel zu der Schwenkachse (A2) verlaufenden, Schwenkachse (A1) am Ständer (3) linear frei beweglich gelagert ist, und
- mittels des Schwenkantriebes (6) einem Schwenkhebel (7) eine Drehbewegung um die zweite Schwenkachse (A1) erteilbar ist,
- wobei das der zweiten Schwenkachse (A1) abgewandte Ende des Schwenkhebels (7) drehbar mit der Schwenkeinheit (2) verbunden ist und damit eine dritte Schwenkachse (A3) bildet, die parallel zu den Schwenkachsen (A1, A2) verläuft, so dass durch die Drehbewegung des Schwenkantriebes (6) um die Schwenkachse (A1) eine Schwenkbewegung der Schwenkeinheit (2) um die Schwenkachse (A2) und gleichzeitig eine zwangsweise lineare Verschiebung des Schwenkantriebes (6) an dem Ständer (3) erzielbar ist.

2. Einrichtung zum Wechseln von Werkzeugen und/oder Werkstücken nach Anspruch 1, **dadurch gekennzeichnet, dass** das antriebsseitige Ende (7. 1) des Schwenkhebels (7) drehfest mit dem Schwenkantrieb (6) verbunden ist.

3. Einrichtung zum Wechseln von Werkzeugen und/oder Werkstücken nach einem der Ansprüche 1 und 2, **dadurch gekennzeichnet, dass** der Schwenkhebel (7) mit seinem abtriebsseitigen Ende (7.2) in einem auf der Schwenkeinheit (2) angeordneten Gelenkpunkt (P2) um die Schwenkachse (A3) drehbar gelagert ist.

4. Einrichtung zum Wechseln von Werkzeugen und/oder Werkstücken nach einem der Ansprüche 1 bis 3, **dadurch gekennzeichnet, dass** der Schwenkantrieb (6) auf einem an dem Ständer (3) linear verschiebbar gelagerten Schlitten (4) angeordnet ist.

5. Einrichtung zum Wechseln von Werkzeugen und/oder Werkstücken nach einem der Ansprüche 1 bis 4, **dadurch gekennzeichnet, dass** die drei Schwenkachsen (A1, A2, A3) orthogonal zu der Richtung der linearen Verschiebebewegung des Schwenkantriebes (6) verlaufen, wobei der Schlitten (4) an dem Ständer (3) in orthogonal zu den Schwenkachsen (A1, A2, A3) angeordneten Führungsschienen (4) verschiebbar ist.

6. Einrichtung zum Wechseln von Werkzeugen und/oder Werkstücken nach einem der Ansprüche 1 bis 5, **dadurch gekennzeichnet, dass** die Schwenkachse (A1) und die der drehbeweglichen Lagerung der Schwenkeinheit (2) am Ständer (3) zugeordnete Schwenkachse (A2) sich in einer gemeinsamen, der linearen Verschiebebewegung des Schwenkantriebes (6) gleichgerichteten Ebene befinden.

7. Einrichtung zum Wechseln von Werkzeugen und/oder Werkstücken nach einem der Ansprüche 1 bis 6, **dadurch gekennzeichnet, dass** in einer Ausgangsstellung vor Beginn der Schwenkbewegung sich der Schwenkantrieb (6) in einer Endlage an dem Ständer (3) befindet, welche einem maximalen Abstand (dₘₐₓ) zwischen den beiden Schwenkachsen (A1) und (A2) entspricht.

8. Einrichtung zum Wechseln von Werkzeugen und/oder Werkstücken nach einem der Ansprüche 1 bis 7, **dadurch gekennzeichnet, dass** in einer Endstellung nach Beendigung der Schwenkbewegung sich der Schwenkantrieb (6) in einer Endlage an dem Ständer (3) befindet, welche einem maximalen Abstand (dₘₐₓ) zwischen den beiden Schwenkachsen (A1) und (A2) entspricht.

9. Einrichtung zum Wechseln von Werkzeugen und/oder Werkstücken nach einem der Ansprüche 1 bis 8, **dadurch gekennzeichnet, dass** in einer Zwischenstellung der Schwenkeinheit (2), die einer halben Schwenkbewegung um die Schwenkachse (A2) entspricht, sich der Schwenkantrieb (6) in einer Endlage an dem Ständer (3) befindet, welche einen minimalen Abstand (dₘᵢₙ) zwischen den beiden Schwenkachsen (A1) und (A2) bedeutet.

10. Einrichtung zum Wechseln von Werkzeugen und/oder Werkstücken nach Anspruch 9, **dadurch gekennzeichnet, dass** die halbe Schwenkbewegung der Schwenkeinheit (2) um die Schwenkachse (A2) einem Drehwinkel von etwa 45° entspricht.

11. Einrichtung zum Wechseln von Werkzeugen und/oder Werkstücken nach einem der Ansprüche 1 bis 10, **dadurch gekennzeichnet, dass** bei einer Drehung des Schwenkantriebes (6) um die Schwenkachse (A1) um 180° durch die Schwenkeinheit (2) eine Schwenkbewegung um 90° absolvierbar ist.

12. Einrichtung zum Wechseln von Werkzeugen und/oder Werkstücken nach einem der Ansprüche 1 bis 11, **dadurch gekennzeichnet, dass** an der Schwenkeinheit (2) mindestens eine Halterung zur Aufnahme von mindestens einem Werkzeug (1) und/oder Werkstück angebracht ist.

13. Einrichtung zum Wechseln von Werkzeugen und/oder Werkstücken nach einem der Ansprüche 1 bis 12, **dadurch gekennzeichnet, dass** der Schwenkantrieb (6) an dem Ständer (3) in vertikaler Richtung verschiebbar ist, wobei ein sinusförmiger Winkelgeschwindigkeitsverlauf der Schwenkbewegung der Schwenkeinheit (2) erzielbar ist.

14. Einrichtung zum Wechseln von Werkzeugen und/oder Werkstücken nach einem der Ansprüche 1 bis 13, **dadurch gekennzeichnet, dass** in der Ausgangsstellung und in der Endstellung der Schwenkeinheit (2) jeweils eine Totpunktlage mit einer mechanischen Verriegelung dieser Stellungen vorhanden ist.

15. Einrichtung zum Wechseln von Werkzeugen und/oder Werkstücken nach einem der Ansprüche 1 bis 14, **dadurch gekennzeichnet, dass** durch die Nutzung des Eigengewichtes der Schwenkeinheit (2) das Drehmoment des Schwenkantriebes (6) reduzierbar ist.

## Claims

1. A device for changing tools and/or workpieces, having a stand (3), which is movable between a tool/workpiece magazine and a machining chamber of a machining center, having a pivot drive (6), which is situated on the stand (3), and which is provided for impinging a pivot unit (2), the tool (1) and/or the workpiece being able to be brought by a pivot movement of the pivot unit (2) around a pivot axis (A2) from a horizontal or vertical storage position in the tool/workpiece magazine into a vertical or horizontal operating position in the machining chamber and vice versa,
**characterized in that**
- the pivot unit (2) is mounted in a joint point (P1), which is situated fixed on the stand (3), so it is rotationally movable around the pivot axis (A2),
- the pivot drive (6) is mounted so it is linearly freely movable on the stand (3) using a second pivot axis (A1), which runs parallel to the pivot axis (A2), and
- a rotational movement around the second pivot axis (A1) may be imparted to a pivot lever (7) using the pivot drive (6),
- the end of the pivot lever (7) facing away from the second pivot axis (A1) being connected to the pivot unit (2) so it is rotatable and thus forming a third pivot axis (A3), which runs parallel to the pivot axes (A1, A2), so that, through the rotational movement of the pivot drive (6) around the pivot axis (A1), a pivot movement of the pivot unit (2) around the pivot axis (A2) and simultaneously a forced linear displacement of the pivot drive (6) on the stand (3) are achievable.

2. The device for changing tools and/or workpieces according to Claim 1, **characterized in that** the drive-side end (7.1) of the pivot lever (7) is connected rotationally fixed to the pivot drive (6).

3. The device for changing tools and/or workpieces according to one of Claims 1 and 2, **characterized in that** the output-side end (7.2) of the pivot lever (7) is mounted in a joint point (P2), which is situated on the pivot unit (2), so it is rotatable around the pivot axis (A3).

4. The device for changing tools and/or workpieces according to one of Claims 1 through 3, **characterized in that** the pivot drive (6) is situated on a carriage (4), which is mounted so it is linearly displaceable on the stand (3).

5. The device for changing tools and/or workpieces according to one of Claims 1 through 4, **characterized in that** the three pivot axes (A1, A2, A3) run orthogonally to the direction of the linear displacement movement of the pivot drive (6), the carriage (4) being displaceable on the stand (3) in guide rails (4), which are situated orthogonally to the pivot axes (A1, A2, A3).

6. The device for changing tools and/or carriages according to one of Claims 1 through 5, **characterized in that** the pivot axis (A1) and the pivot axis (A2), which is associated with the rotationally-movable mounting of the pivot unit (2) on the stand (3), are located in a shared plane aligned with the linear displacement movement of the pivot drive (6).

7. The device for changing tools and/or workpieces according to one of Claims 1 through 6, **characterized in that,** in a starting position before beginning the pivot movement, the pivot drive (6) is located in a terminal position on the stand (3), which corresponds to a maximum distance (dₘₐₓ) between the two pivot axes (A1) and (A2).

8. The device for changing tools and/or workpieces according to one of Claims 1 through 7, **characterized in that,** in a terminal position after ending the pivot movement, the pivot drive (6) is located in a terminal position on the stand (3), which corresponds to a maximum distance (dₘₐₓ) between the two pivot axes (A1) and (A2).

9. The device for changing tools and/or workpieces according to one of Claims 1 through 8, **characterized in that**, in an intermediate position of the pivot unit (2), which corresponds to a half pivot movement around the pivot axis (A2), the pivot drive (6) is located in a terminal position on the stand (3), which signifies a minimum distance (dₘᵢₙ) between the two pivot axes (A1) and (A2).

10. The device for changing tools and/or workpieces according to Claim 9, **characterized in that** the half pivot movement of the pivot unit (2) around the pivot axis (A2) corresponds to a rotational angle of approximately 45°.

11. The device for changing tools and/or workpieces according to one of Claims 1 through 10, **characterized in that,** during a rotation of the pivot drive (6) around the pivot axis (A1) by 180°, a pivot movement by 90° may be completed by the pivot unit (2).

12. The device for changing tools and/or workpieces according to one of Claims 1 through 11, **characterized in that** at least one holder for accommodating at least one tool (1) and/or workpiece is attached to the pivot unit (2).

13. The device for changing tools and/or workpieces according to one of Claims 1 through 12, **characterized in that** the pivot drive (6) is displaceable on the stand (3) in the vertical direction, a sinusoidal angular velocity curve of the pivot movement of the pivot unit (2) being achievable.

14. The device for changing tools and/or workpieces according to one of Claims 1 through 13, **characterized in that**, in the starting position and in the terminal position of the pivot unit (2), a dead center position is provided in each case having a mechanical lock of these positions.

15. The device for changing tools and/or workpieces according to one of Claims 1 through 14, **characterized in that** the torque of the pivot drive (6) is reducible by using the intrinsic weight of the pivot unit (2).

## Revendications

1. Dispositif pour l'échange d'outils et/ou de pièces, avec un support (3) mobile entre un magasin d'outils ou de pièces et un espace d'usinage d'un centre d'usinage, avec un entraînement pivotant (6) disposé sur le support (3) qui est destiné à agir sur une unité pivotante (2), l'outil (1) et/ou la pièce pouvant être amenés par un mouvement pivotant de l'unité pivotante (2) autour d'un axe de pivotement (A2) d'une position de stockage horizontale ou verticale dans le magasin d'outils ou de pièces à une position de travail verticale ou horizontale dans l'espace d'usinage et vice versa,
**caractérisé en ce que**
- l'unité pivotante (2) est supportée avec possibilité de rotation autour de l'axe de pivotement (A2) dans un point d'articulation (P1) solidaire du bâti sur le support (3) ;
- l'entraînement pivotant (6) est supporté de façon à pouvoir se déplacer librement de façon linéaire sur le support (3) avec un deuxième axe de pivotement (A1) parallèle à l'axe de pivotement (A2) ; et
- l'entraînement pivotant (6) peut imprimer à un levier pivotant (7) un mouvement de rotation autour du deuxième axe de pivotement (A1),
- l'extrémité du levier pivotant (7) opposée au deuxième axe de pivotement (A1) étant reliée de façon rotative avec l'unité pivotante (2) et formant avec formant avec celle-ci un troisième axe de pivotement (A3) qui est parallèle aux axes de pivotement (A1, A2), de sorte que le mouvement de rotation de l'entraînement pivotante (6) autour de l'axe de pivotement (A1) permet d'obtenir un mouvement pivotant de l'unité pivotante (2) autour de l'axe de pivotement (A2) et en même temps une translation linéaire forcée de l'entraînement pivotant (6) sur le support (3).

2. Dispositif pour le changement d'outils et/ou de pièces selon la revendication 1, **caractérisé en ce que** l'extrémité du côté de l'entraînement (7.1) du levier pivotant (7) est reliée de manière solidaire en rotation à l'entraînement pivotant (6).

3. Dispositif pour le changement d'outils et/ou de pièces selon l'une des revendications 1 et 2, **caractérisé en ce que** le levier pivotant (7) est supporté à son extrémité du côté de sortie (7.2) dans un point d'articulation (P2) disposé sur l'unité pivotante (2) avec possibilité de rotation autour de l'axe de pivotement (A3).

4. Dispositif pour le changement d'outils et/ou de pièces selon l'une des revendications 1 à 3, **caractérisé en ce que** l'entraînement pivotant (6) est disposé sur un chariot (4) supporté avec possibilité de translation linéaire sur le support (3).

5. Dispositif pour le changement d'outils et/ou de pièces selon l'une des revendications 1 à 4, **caractérisé en ce que** les trois axes de pivotement (A1, A2, A3) sont perpendiculaires à la direction de translation linéaire de l'entraînement pivotant (6), le chariot (4) pouvant se déplacer sur le support (3) dans des rails de guidage (4) disposés perpendiculairement aux axes de pivotement (A1, A2, A3).

6. Dispositif pour le changement d'outils et/ou de pièces selon l'une des revendications 1 à 5, **caractérisé en ce que** l'axe de pivotement (A1) et l'axe de pivotement (A2) associé à l'appui mobile en rotation de l'unité pivotante (2) sur le support (3) se trouvent dans un même plan orienté de la même manière que la translation linéaire de l'entraînement pivotant (6).

7. Dispositif pour le changement d'outils et/ou de pièces selon l'une des revendications 1 à 6, **caractérisé en ce que** dans une position de départ, avant le début du mouvement pivotant, l'entraînement pivotant (6) se trouve dans une position de fin de course sur le support (3) qui correspond à une distance maximale (dₘₐₓ) entre les deux axes de pivotement (A1) et (A2).

8. Dispositif pour le changement d'outils et/ou de pièces selon l'une des revendications 1 à 7, **caractérisé en ce que** dans une position finale après la fin du mouvement pivotant, l'entraînement pivotant (6) se trouve dans une position de fin de course sur le support (3) qui correspond à une distance maximale (dₘₐₓ) entre les deux axes de pivotement (A1) et (A2).

9. Dispositif pour le changement d'outils et/ou de pièces selon l'une des revendications 1 à 8, **caractérisé en ce que** dans une position intermédiaire de l'unité pivotante (2), correspondant à un demi-mouvement pivotant autour de l'axe de pivotement (A2), l'entraînement pivotant (6) se trouve dans une position de fin de course sur le support (3) qui correspond à une distance minimale (dₘᵢₙ) entre les deux axes de pivotement (A1) et (A2).

10. Dispositif pour le changement d'outils et/ou de pièces selon la revendication 9, **caractérisé en ce que** le demi-mouvement pivotant de l'unité pivotante (2) autour de l'axe de pivotement (A2) correspond à un angle de rotation d'environ 45°.

11. Dispositif pour le changement d'outils et/ou de pièces selon l'une des revendications 1 à 10, **caractérisé en ce que** lors d'une rotation de l'entraînement pivotant (6) autour de l'axe de pivotement (A1) de 180°, l'unité pivotante (2) peut effectuer un mouvement pivotant de 90°.

12. Dispositif pour le changement d'outils et/ou de pièces selon l'une des revendications 1 à 11, **caractérisé en ce qu'**il est prévu sur l'unité pivotante (2) au moins une fixation pour recevoir au moins un outil (1) et/ou une pièce.

13. Dispositif pour le changement d'outils et/ou de pièces selon l'une des revendications 1 à 12, **caractérisé en ce que** l'entraînement pivotant (6) peut se déplacer dans le sens vertical sur le support (3), le mouvement pivotant de l'unité pivotante (2) pouvant réaliser une évolution sinusoïdale de la vitesse angulaire.

14. Dispositif pour le changement d'outils et/ou de pièces selon l'une des revendications 1 à 13, **caractérisé en ce que** dans la position de départ et la position finale de l'unité pivotante (2), il est prévu une position de point mort avec un verrouillage mécanique de ces positions.

15. Dispositif pour le changement d'outils et/ou de pièces selon l'une des revendications 1 à 14, **caractérisé en ce que** le poids propre de l'unité pivotante (2) peut être utilisé pour réduire le couple de rotation de l'entraînement pivotant (6).
